# EUROPÄISCHE PATENTANMELDUNG

(11) **EP 4 227 125 A1**
(43) Veröffentlichungstag der Anmeldung: **16.08.2023**
(21) Anmeldenummer: 23156641.5
(22) Anmeldetag: 14.02.2023
(51) Int. Cl.: B60J 1/20

(54) **SONNENBLENDE**

(30) Priorität: 15.02.2022 DE 102022103507
(71) Anmelder: Raschkov, Oleg, 5020 Salzburg (AT)
(72) Erfinder: Raschkov, Oleg, 5020 Salzburg (AT)
(74) Vertreter: Flach Bauer & Partner Patentanwälte mbB

(57) **Zusammenfassung**

Eine verbesserte Sonnenblende für Fenster (2) und insbesondere Kraftfahrzeug-Seitenfenster (2a) zeichnet sich unter anderem durch folgende Merkmale aus:
- die Sonnenblende (1) umfasst einen oberen Bügel (3) und einen unteren Bügel (5),
- der obere Bügel (3) weist zwei gegenüberliegende Enden (4a, 4b) und der untere Bügel (5) weist zwei gegenüberliegende Enden (6a, 6b) auf,
- der obere Bügel (3) und der untere Bügel (5) sind an einen ihrer beiden Enden (4a, 6a) mittels einer Gelenkverbindung (11) gelenkig miteinander verbunden,
- zwischen dem oberen und dem unteren Bügel (3, 5) ist ein flächiges Schirmungsmaterial (7) vorgesehen und darüber gehalten,
- das Schirmungsmaterial (7) ist flexibel,
- der untere Bügel (5) ist zwischen einer Ausgangsposition, in der das flächige Schirmungsmaterial (7) zwischen oberen und unteren Bügel (3, 5) verstaut ist, und einer Sonnenschutzposition, in der der untere Bügel (5) gegenüber dem oberen Bügel (3) um seine Gelenkverbindung (11) verschwenkt oder aufgeklappt ist, verstellbar.

## Beschreibung

Die Erfindung betrifft eine Sonnenblende insbesondere für Kfz-Seitenfenster.

Ein Sonnenschutz, insbesondere auch in Kraftfahrzeugen, erfüllt mehrere Funktionen. Zum einen dienen die Sonnenblenden insbesondere für den Fahrer als Sichtschutz, wenn die Sonne bei niedrigem Sonnenstand von vorne her in das Fahrzeug einfällt. Sie dient also somit dem Sicht- und Blendschutz. Darüber hinaus können sie aber auch vor zu intensiver Sonneneinstrahlung schützen, damit ein Kraftfahrzeug nicht zu sehr aufgeheizt wird.

Sonnenblenden in einem Fahrzeug sind z.B. für den Fahrer-und den Beifahrersitz in der Kraftfahrzeugkabine vorgesehen, und zwar oberhalb der Windschutzscheibe. Dabei sind sie üblicherweise über eine vorne benachbart zum oberen Rand der Frontscheibe verlaufende Schwenkachse gehalten. Um sie einzusetzen, werden sie um ihre horizontale Schwenkachse in Richtung Frontscheibe verschwenkt. In dieser Position können sie aber nur Sonnenstrahlen abschirmen, die im Wesentlichen über die Frontscheibe in das Kraftfahrzeug einstrahlen.

Ferner sind die meisten derartigen Sonnenblenden so ausgestaltet, dass sie zusätzlich um eine vertikale Achse in Richtung Seitenfenster verschwenkt werden können. Dadurch ist ein ergänzender Schutz vor Sonnenstrahlen möglich, die seitlich oder überwiegend seitlich in das Kraftfahrzeug fallen. Häufig sind aber diese Sonnenblenden dann nicht lang genug, so dass bei vor allem nach hinten verfahrenem Fahrer- oder Beifahrersitz Sonnenstrahlen immer noch unabgeschirmt auf den Fahrer- oder Beifahrersitz auftreffen und damit die Sicht der dort sitzenden Personen beeinträchtigen können.

Darüber hinaus gibt es auch insbesondere für die Seitenscheiben eines Kraftfahrzeugs separate Sonnenblenden.

In einer einfachsten Form sind diese flächig ausgestaltet und werden über Halteclips der herunterlassbaren Fensterscheiben eingehängt. Alternativ dazu gibt es auch entsprechende Seitenfensterblenden, die beispielsweise über Saugnäpfe gehalten werden.

Zusätzlich sind auch mit einem ausrollbaren Gewebe versehene Seitenblenden bekannt, die in einem zylinderförmigen Gehäuse eingerollt sind und bei Bedarf herausgezogen und in herausgezogener Position mittels geeigneter Halteelemente dann an der Seitenscheibe im aufgespannten Zustand fixiert werden können.

All diese Maßnahmen sind jedoch vergleichsweise aufwendig.

Aufgabe der vorliegenden Erfindung ist es von daher, eine demgegenüber verbesserte Lösung zu schaffen, insbesondere für Kraftfahrzeug-Seitenfenster.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Die erfindungsgemäße Lösung zeichnet sich zum einen durch ihre Einfachheit aus. Die erfindungsgemäße Sonnenblende ist dabei nicht nur einfach aufgebaut, sondern kann auch höchst einfach bedient werden, und dies, obgleich sie nicht elektrisch betätigbar ist, sondern mechanisch ausgelöst wird.

Ferner ist die Erfindung auch jederzeit in einem Kraftfahrzeug nachrüstbar. Aufgrund der einfachen Gestaltung der erfindungsgemäßen Lösung ist dabei die bevorzugt nachrüstbare Sonnenblende zudem auch jederzeit von Laien problemlos montierbar.

Die erfindungsgemäße Lösung zeichnet sich im Wesentlichen dadurch aus, dass die Blende in der Regel einen oberen, üblicherweise schmal gestalteten Haltesteg oder Haltestab aufweist, der als Befestigungssteg ausgebildet sein kann und/oder mit einer Befestigungseinrichtung zusätzlich versehen sein kann, um die Blende beispielsweise oberhalb oder im Bereich des oberen Randes eines Kraftfahrzeug-Seitenfensters anzubringen. Dabei ist die erfindungsgemäße Sonnenblende vor allem für seitliche Kraftfahrzeugfenster für den Fahrer- oder den Beifahrersitz geeignet wie aber auch für die Seitenfenster für die rückwärtigen Sitze oder Sitzbank im Kraftfahrzeug. Insbesondere die Seitenfenster im Bereich der Fahrer- oder Beifahrertür weisen üblicherweise einen von vorne nach hinten verlaufenden eher konvex gestalteten Scheibenrand auf, für die sich die erfindungsgemäße Blende ebenso eignet.

Bereits an dieser Stelle wird angemerkt, dass es eines separaten Befestigungssteges nicht zwingend bedarf, sondern dass ein sogenannter Haltesteg für die erfindungsgemäße Sonnenblende auch durch den vorderen und oberen Teil des Türrahmens selbst gebildet sein kann, an bzw. in welchem die hochgefahrene Sonnenblende sogar völlig unsichtbar oder fast unsichtbar untergebracht sein kann.

Die erfindungsgemäße Sonnenblende besteht im Wesentlichen nur aus einem oberen Haltesteg oder Haltestab und einem unteren Haltesteg oder Haltestab. Diese sind relativ zueinander zwischen einer eingeschwenkten und einer eine ausgeschenkten Stellung vorzugsweise um eine gemeinsame Gelenkverbindung verschwenkbar, wobei dazwischen ein die Sonnenschutzfunktion bewirkendes flächiges Abschirmmaterial gehalten ist, d.h. insbesondere aufgespannt ist. Dieses flächige Abschirmmaterial besteht vorzugsweise aus einem Faltfächer bzw. einer Faltfächer-ähnlichen Faltenkonstruktion.

Sofern eine Halteeinrichtung zur Anbringung der Sonnenblende am Türrahmen oder Kraftfahrzeugrahmen oberhalb einer Seitentür vorgesehen ist, besteht diese vorzugsweise aus einem gummielastischen nachgebenden Material, sodass hierüber eine entsprechende Anpassung an die Kontur beispielsweise des Fensterscheibenverlaufes am Fahrer- oder Beifahrersitz möglich ist und auch dadurch die Sonnenblende dieser Kontur folgend an der Unterseite beispielsweise des Türrahmenprofils und oberhalb der Fensterscheibe erfolgen kann.

Die Verwendung einer Faltenbalgkonstruktion als Sonnenblende ist eine einfache aber sehr wirkungsvolle Umsetzung, um eine Abschirmung vor blendenden Sonnenstrahlen zu gewährleisten. Anstelle einer Faltfächer-Konstruktion kann auch eine Konstruktion verwendet werden, die eine Vielzahl von keilförmigen Elementen umfasst. Bei geöffneten Fächer kommen diese keilförmigen Elemente seitlich versetzt zueinander zu liegen, wodurch eine durchgängige geschlossene und damit abschirmende Fläche erzeugt wird. Diese keilförmigen Elemente sind üblicherweise an ihrer Schmalseite über einen Stift miteinander gelenkig verbunden gehalten, der durch entsprechende Bohrungen im Bereich der schmalsten Stelle der keilförmigen Schirmelemente hindurch verläuft. An der dazu entfernten Seite sind die einzelnen keilförmigen Fächer in der Regel über ein Band miteinander verbunden, die die maximale seitliche quer-Öffnungsbewegung eines keilförmigen Kirmeselementes zu einem benachbarten begrenzen zwei benachbarte Schirmungselemente noch in einem zumindest geringfügig überlappenden Bereich zueinander halten.

Dabei muss die erfindungsgemäße Blende sich nur über eine Teilhöhe des Kraftfahrzeugseitenfensters erstrecken.

Soll die Sonnenblende wieder in ihre eingefahrene Ausgangsposition verstellt werden, muss der frei verschwenkbare Haltesteg oder Haltestab nur wieder in seine eingeschwenkte Ausgangslage zurück verschwenkt werden, in der er mehr oder weniger parallel zu dem die Haltefunktion übernehmenden oberen Haltebügel zu liegen kommt, also mehr oder weniger parallel zu dem oberen Haltesteg oder Haltestab. Hier ist bevorzugt eine Rast-, Schnapp- und/oder Klemm-Verbindung vorgesehen, um den verschwenkbaren unteren Bügel in seiner die Sonnenblende in ihrer eingefahrenen Position befindlichen Ausgangslage zu halten. Beim Lösen dieser Verbindung wird der verschwenkbare untere Bügel durch eine bevorzugt integriert vorgesehene Federeinrichtung in Öffnungsrichtung vorgespannt verschwenkt und dann auch in seiner maximalen Öffnungsposition vorgespannt gehalten.

Dabei ist es ausreichend, wenn der untere Haltesteg beispielsweise eine Breite von 5-10 mm aufweist.

Die Erfindung wird nachfolgend anhand von Zeichnungen näher erläutert. Dabei zeigen im Einzelnen:
- Figur 1:: eine Seitenansicht der erfindungsgemäßen Blende in eingebautem Ausgangszustand, d. h. bei einer Anbringung am Seitenfenster beispielsweise einer Fahrertür;
- Figur 2:: eine schematische Seitenansicht die Blende vor einem Kraftfahrzeug-Seitenfenster während des Öffnungs- bzw. Schließvorganges der Sonnenblende;
- Figur 3:: eine schematische Seitenansicht der erfindungsgemäßen Lösung, in welcher die Sonnenblende in voller Öffnungsstellung gezeigt ist;
- Figur 4:: eine schematische Querschnittsdarstellung senkrecht zu der Längserstreckung der erfindungsgemäßen Sonnenblende in geschlossener Ausgangsposition;
- Figur 5:: eine Seitenansicht der erfindungsgemäßen Sonnenblende in einer zu Figur 1 um 180° vertreten Einbauposition, und zwar weiter vorne liegend an einer Fahrzeugtür in einem eher konkav gekrümmten und dabei abfallenden Türrahmen-Profil; und
- Figur 6:: eine Abwandlung, bei der die erfindungsgemäße Sonnenblende beispielsweise an einem Fenster in einem Gebäude angebracht ist.

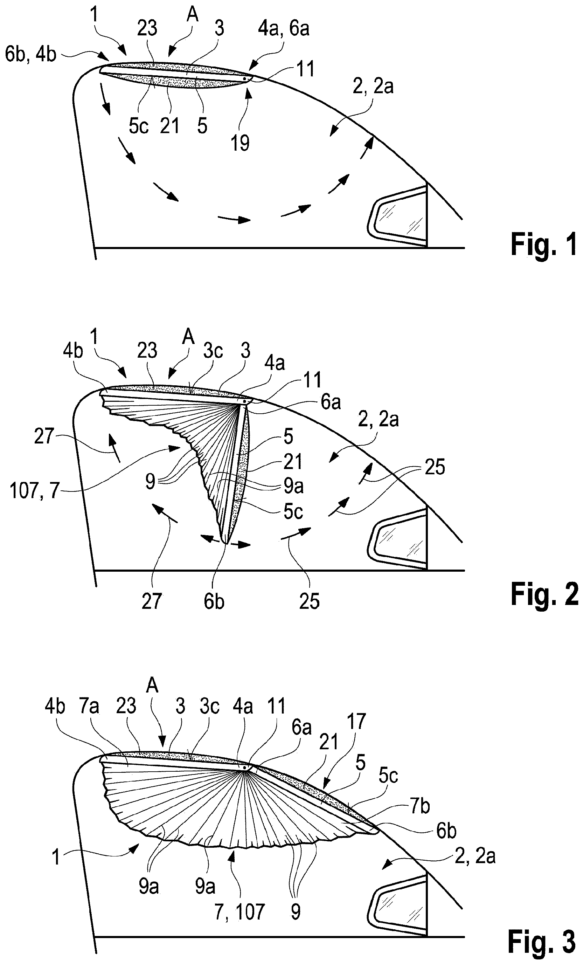

In Figur 1 ist in schematischer Seitenansicht die erfindungsgemäße Sonnenblende 1 im geschlossenen Zustand gezeigt, die sich für Fenster 2 allgenmein und insbesondere für Kraftfahrzeug-Seitenfenster 2a, d.h. wiederum bevorzugt für das Fahrer- oder Beifahrerfenster eignet, darüber hinaus insbesondere auch für Fenster beispielsweise mit gewölbeartig gebogener oberer Fensterbegrenzung. Daneben kann die erfindungsgemäße Sonnenblende auch an jeder anderen geeigneten Stelle an- oder eingebaut werden.

In Figur 1 ist die erfindungsgemäße Sonnenblende wie erwähnt in Seitenansicht im zugeklappter Position, in Figur 2 in einer seitlichen Darstellung während des Aufschwenkens der Sonnenblende in ihre Funktionsstellung bzw. umgekehrt während des Schließens der Sonnenblende und in Figur 3 in schematischer Seitenansicht in ihrer Funktionsstellung gezeigt.

Im Wesentlichen umfasst die erfindungsgemäße Sonnenblende einen Bügel 3, der nachfolgend auch als oberer Haltesteg oder Haltestab 3 bezeichnet wird, und einen unteren Bügel 5, der nachfolgend teilweise auch als unterer Haltesteg oder Haltestab 5 benannt wird. Die Verwendung derartiger steg- oder stabförmiger Ausbildungsformen stellt aber nur eine bevorzugte Variante dar. Von daher ist es im Rahmen der Erfindung ausreichend, wenn ein oberer Haltesteg oder Haltestab 3 und ein unterer Haltesteg oder Haltestab 5 vorgesehen sind, die bevorzugt steg- oder stabförmig gestaltet sein können, aber nicht müssen.

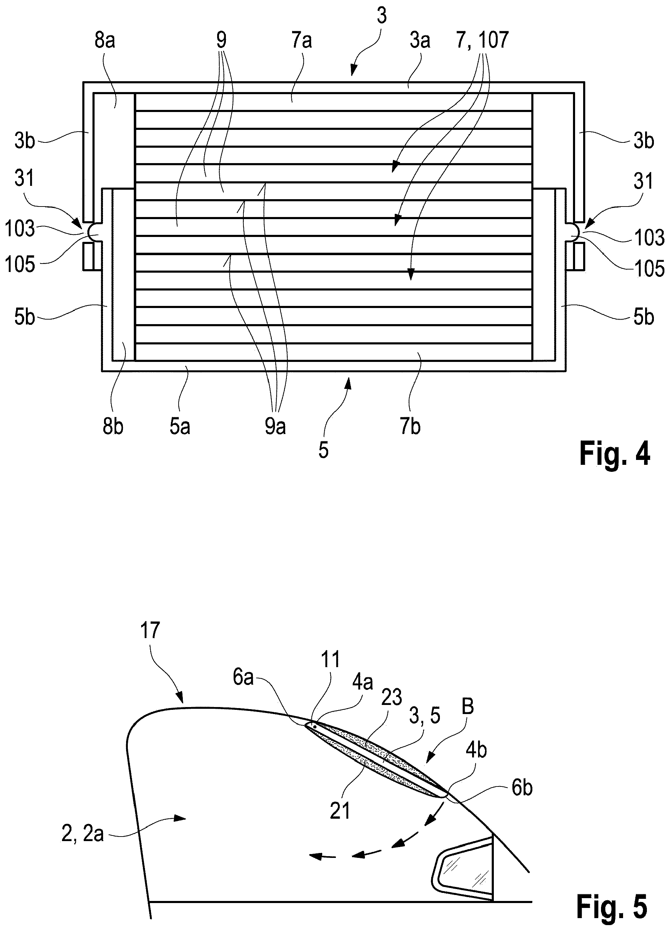

Zwischen dem oberen und dem unteren Haltesteg oder Haltestab ist ein flächiges Material 7 untergebracht bzw. vorgesehen. In der Regel ist der obere Materialrand 7a des flächigen Materials 7 an dem oberen Haltesteg oder Haltestab 3 befestigt und/oder gehalten ist, wobei ein unterer Materialrand 7b des flächigen Materials 7 an dem unteren Haltesteg oder Haltestab 5 befestigt ist. Die Befestigung kann dabei beispielsweise jeweils an der Unterseite 3a des oberen Haltesteges 3 und an der Oberseite 5a des unteren Haltesteges 5 erfolgen. Möglich ist dabei aber beispielsweise auch, wie aus Figur 4 zu ersehen ist, dass beispielsweise der obere Bügel 3 und/oder der untere Bügel 5 im Querschnitt quer zur Längsrichtung der Sonnenblende eine U-förmige Ausgestaltung aufweisen, wodurch zwischen den beiden seitlich versetzten Seitenschenkeln 3b und der die beiden Seitenschenkel 3b verbindenden Basis 3a des im gezeigten Ausführungsbeispiels oberen Bügels 3 eine Tasche oder nutförmige Vertiefung 8a und zwischen den beiden mit Seitenversatz zueinander vorgesehenen Seitenschenkeln 5b und der nutförmigen Basis 5a des im gezeigten Ausführungsbeispiels unteren Bügels 5 eine Tasche oder nutförmige Vertiefung 8b gebildet wird. Im zusammengeklapptem Zustand gemäß Figur 1 sowie Figur 4 kommt dann das dem eigentlichen Sonnenschutz diente flächige Material 7 in diesen nutförmigen Vertiefungen 8a und 8b zu liegen. Der obere Materialrand 7a kann dabei mit der Basis 3a in der oberen Vertiefung 8a des oberen Bügels 3 und der zu äußerst liegende untere Materialrand 7b mit der Basis 5b der unteren Vertiefung 8b des unteren Bügels 5 verbunden sein.

Bei dem flächigen Material kann es sich um jedes geeignete Material handeln, beispielsweise um ein filmartiges oder kunststofffilmartiges Material, um ein Gewebematerial etc., welches bevorzugt eine gewisse Steifigkeit bzw. eine gewisse Formstabilität bezüglich der nachfolgend bevorzugt verwendeten Faltenstruktur aufweist.

Bevorzugt weist das dem eigentlichen Sonnenschutz diente flächige Material 7 von Hause aus oder durch geeignete Zusatzmittel eine fächerartige Faltenstruktur derart auf, dass die Falten 9 im zusammengelegten Ausgangszustand gemäß Figuren 1 und 4 parallel zu dem oberen und unteren Haltesteg oder Haltestab 3, 5 verlaufen. Dabei können die Falten 9 einen solchen Abstand und damit eine solche Faltenbreite zwischen jeweils zwei aufeinanderfolgenden Kanten 9a aufweisen, dass das zusammengelegte flächige Material 7 in der Querschnittsdarstellung gemäß Figur 4 nicht über die Seitenstege 3a bzw. 5a überstehen.

Die Gestaltung ist bevorzugt derart, dass bei geschlossener Sonnenblende 1 der untere Bügel 5 zumindest teilweise in den Aufnahmeraum 8a des oberen Bügels 3 eingreift oder eintaucht oder umgekehrt der obere Bügel 3 zumindest mit einer Teilhöhe in den Aufnahmeraum 8b des unteren Bügels 5 eintaucht. Dazu sind beide Bügel geringfügig unterschiedlich breit gestaltet, damit der eine Bügel in den anderen eintauchen kann, wie anhand von Figur 4 zu ersehen ist.

Bereits an dieser Stelle wird angemerkt, dass der obere und/oder der untere Bügel bzw. Haltesteg oder Haltestab nicht zwingend eine im Querschnitt U-förmige Ausgestaltung aufweisen müssen. Ebenso ist es möglich, dass beispielsweise nur der obere Bügel 3 oder der untere Bügel 5 diese im Querschnitt U-förmige Gestaltung aufweisen. Mögliche sogar, dass beide Bügel 3 und 5 ohne eine derartige nutförmigen Vertiefung 8a oder 8b versehen sind, also nicht mit der erläuterten nutförmigen Vertiefung versehen sind.

An einem der beiden gegenüberliegenden Enden 4a und 4b des oberen Haltestegs oder Haltestabs 3 ist eine Gelenkverbindung 11 vorgesehen oder ausgebildet, worüber der obere Haltesteg oder Haltestab 3 mit dem benachbarten Ende 6a oder 6b des unteren Haltestegs oder Haltestabs 5 bevorzugt kniegelenkförmig verbunden ist.

In den Figuren 1 und 2 ist die Gesamtlänge der Sonnenblende im zusammengeklapptem Zustand zu ersehen.

Die beschriebene Sonnenblende 1 wird beispielsweise wie in den Figuren 1 bis 4 gezeigt im Bereich eines Seitenfensters 2a eines Kraftfahrzeugs angebracht. Anhand der Figuren 1 bis 3 ist dabei in einer schematischen Seitenansicht vom Inneren eines Kraftfahrzeuges aus betrachtet das linksliegende Seitenfenster 2a einer Fahrertür dargestellt.

Dabei wird üblicherweise der obere Haltesteg oder Haltestab 3 an einer angrenzenden gekrümmten Fläche der Kraftfahrzeugtür üblicherweise benachbart zum Kraftfahrzeug-Seitenfenster 2a angebaut, um die Sonnenblende 1 zu halten. Ausreichend ist aber ebenfalls, wenn beispielsweise nur die gegenüberliegenden Enden 4a und 4b oder dazu versetzt oder in der Nähe dazu liegende Endbereiche des oberen Bügels 3 an geeigneter Stelle beispielsweise am oberen Rahmenabschnitt der Fahrzeugtür oberhalb des Seitenfensters beispielsweise in einem Halte- oder Montagebereich A angebracht und gehalten und verankert werden, um die Sonnenblende 1 in der in Figur 1 gezeigten eingeschränkten Ausgangslage zu fixieren.

Die erläuterte Anbringung oder Befestigung der Sonnenblende kann mittels einer separaten Halteeinrichtung erfolgen. Dies kann beispielsweise unter Verwendung einer Klettverschluss-Verbindung realisiert werden. Möglich ist auch die Verwendung eines Doppelklebers oder die direkte Anbringung unter Verwendung einer Klebemasse, durch aufschweißen, durch Verwendung von Magneten etc.. Ebenso können auch Haltenasen an dem oberen Haltesteg oder Haltestab 3 vorgesehen sein, wodurch dieser obere Haltesteg oder Haltestab 3 am oberen eher horizontal verlaufenden Steg des Türrahmens eingehängt werden kann. Beschränkungen auf eine bestimmte Befestigungsmethode besteht nicht.

Soll nunmehr die Sonnenblende in ihrer Sonnenschutzfunktion eingesetzt werden, muss lediglich beispielsweise mit einem oder mit zwei Fingern das im gezeigten Ausführungsbeispiel nachlaufende Ende 6b des unteren Haltestegs oder Haltestabs 5 ergriffen und nach unten weggedrückt werden, wodurch der untere Haltesteg oder Haltestab 3 mit seinem nachlaufende Ende 6b die in Figur 1 und 2 strichliert gezeigte Verschwenkbewegung längst den Pfeilen 25 um seine in diesem Fall vorlaufende Gelenkverbindung 11 durchführt. Diese Verschwenkbewegung wird solange durchgeführt, bis der sogenannte untere Haltesteg oder Haltestab 5 mit seiner Unterseite 5c den entsprechenden Rahmenabschnitt 17 am Türrahmen des Kraftfahrzeuges oder an der Fahrzeug-Karosserie erreicht, also jenen in der Regel nach vorne hin abfallenden Abschnitt des Türrahmens 17 oder der Fahrzeugkarosserie 17 (Figur 3) oberhalb der eigentlichen Glasscheibe 2a. Dabei ist bevorzugt im Bereich der Gelenkverbindung 11 noch eine integrierte und nicht näher gezeigte Federeinrichtung 19 vorgesehen, die jeweils den verschwenkbaren unteren Haltesteg oder Haltestab 5 in Öffnungsrichtung kraftbeaufschlagt und dadurch in seine in Figur 3 wiedergegebene anschlagsbegrenzte Öffnungsstellung an dem entsprechenden Rahmenabschnitt 17 angedrückt hält.

Alternativ oder ergänzend könnte für den verschwenkbaren unteren Bügel 5 für die anschlagsbegrenzte Öffnungsstellung am Rahmenabschnitt 17 (Figur 3) auch eine zusätzliche Befestigungseinrichtung vorgesehen sein, beispielsweise in Form eines lösbaren Klettverschlusses oder unter Verwendung von Magneten. Soll die Sonnenblende wieder geschlossen werden, muss der geöffnete Bügel 5 lediglich mit der Hand ergriffen und unter Überwindung der Haltekraft des verwendeten Klemmverschlusses, der verwendeten Magneten etc. oder entgegengesetzt der Kraft der Federeinrichtung 19 in seine Schließposition in Richtung der Pfeile 27 (Figur 2) verschwenkt werden.

Durch diese Schwenkbewegung des unteren Bügels 5 in Öffnungsrichtung wie aber auch in Schließrichtung wird das daran befestigte flächige Material 7 entsprechend mitgenommen und in die Öffnungsstellung, in der die Verschattungswirkung eintritt, bzw. in Schließstellung verbracht. Die gegenüberliegende Seite des flächigen Materials 7 wird dabei weiterhin durch den fest oder ortsfest am Fenster oder an der Tür befestigten oberen Bügel unverschwenkt gehalten.

Damit zwischen der Unterseite, also der zu dem eigentlichen flächigen Material 7 abgewandt liegenden Seite 5c des unteren Haltestegs oder Haltestabs 5 und dem angrenzenden Holm 17 der Kraftfahrzeugtür kein Abstandsspalt verbleibt (wobei der Holm 17 eventuell nach außen hin konvex gebogen verläuft und die innen liegende konkave Seite nicht bündig mit der Unterseite des unteren Haltestegs oder Haltestabs abschließt), kann hier noch ein aus elastischem Material gebildetes Anpass- oder Ausgleichs-Element 21 aufgeklebt oder allgemein vorgesehen sein, beispielsweise in Form von Schaumstoff oder einem Gummielement. Über dieses Anpass-oder Ausgleichs-Element 21 kann der obere Bügel 3) dann an geeigneter Stelle an einem Fenster oder einer mit einem Fenster versehenen Tür oder Kraftfahrzeugtür befestigt werden.

Ein ähnliches oder vergleichbares Ausgleichs-Element 23 kann auch an der dem Schirmmaterial 7 abgewandt liegenden Seite 3c des verschwenkbaren unteren Bügels 5 vorgesehen sein, um hier in Öffnungsstellung der Sonnenblende den Abstand zwischen der Außenseite des Bügels (5) und der gegebenenfalls gekrümmten Kontur der Scheibe oder des Türrahmens oder des Kraftfahrzeugrahmens auszugleichen und zu überbrücken.

Im gezeigten Ausführungsbeispiel besteht das eigentliche dem Sonnenschutz diente flächige Material 7 aus einer Faltenkonstruktion, ähnlich einem Faltfächer 107. Die gegenüberliegenden äußersten Flächen des Faltfächers sind mit dem angrenzenden Haltesteg oder Haltestab fest verbunden, üblicherweise dort angeklebt. D. h. die äußerste oder obere Fläche 107a des Faltfächers ist mit der angrenzenden Fläche des oberen Haltestegs oder Haltestabs 3 und die äußerste oder untere Fläche 107b des Faltfächers ist mit der angrenzenden Fläche des unteren Haltestegs oder Haltestabs 5 fest verbunden, üblicherweise verklebt oder in sonstiger Weise daran fixiert.

Dadurch wird durch das Verschwenken des unteren Haltestegs oder Haltestabs um die Gelenkverbindung 11 der Faltfächer 107 in seine Öffnungslage verschwenkt, wie ein üblicher Faltfächer.

Abweichend von üblichen Faltfächer ist die radiale Länge der einzelnen Falten 9 oder Faltenabschnitte und damit der Kanten 9a zumindest teilweise unterschiedlich und vorzugsweise im mittleren Bereich zunehmend kürzer. Denn in Öffnungsstellung soll keine teilkreisförmige Verschattung erzeugt werden sondern eine mit eher flacher Unterkante, wie in Seitendarstellung gemäß Figur 3 zu ersehen ist.

In Schließstellung ist der untere Haltesteg oder Haltestab 5 mittels eines Klemm-, Schnapp- oder Rastverschlusses 31 (Figur 4) in seiner oberen Endlage gemäß Figur 1 gehalten, nämlich an dem oberen Haltesteg oder Haltestab 3.

Im gezeigten Ausführungsbeispiel wird der Klemm-, Schnapp-oder Rastverschlusses bzw. die Klemm-, Schnapp- oder Rastverbindung dadurch erzeugt, dass beispielsweise an den Außenseiten der beiden Seitenstege 5b des unteren Bügels 5 jeweils eine keilförmige oder ballig ausgebildete und dabei vorstehende Erhebung 105 ausgebildet ist, die in entsprechende den Seitenstegen 3a des oberen Bügels 3 vorgesehene Ausnehmungen 103 in geschlossener Position der Sonnenblende 1 eingreifen (Figur 4).

Bei der Schließbewegung der Sonnenblende 1 ausgehend von der Öffnungsstellung gemäß Figur 3 in Schließstellung gemäß Figur 1 wird dabei die umgekehrte Verschwenkung für den unteren Haltesteg oder Haltestab 3 durchgeführt, und zwar entgegen der Kraft der nicht näher gezeigten Federeinrichtung, die bevorzugt im Bereich der Gelenkverbindung 11 untergebracht ist. Diese Federeinrichtung wird dadurch wieder gespannt, um bei einer späteren Verschwenkung wiederum in Öffnungslage den unteren Haltesteg oder Haltestab 5 in seine gewünschte Öffnungslage gemäß Figur 2 zu bringen und in seiner maximalen anschlagsbegrenzten Öffnungslage vorgespannt zu halten.

Abweichend von dem gezeigten Ausführungsbeispiel könnte die Fixierung der Sonnenblende auch in einer um 180° gedrehten Variante durchgeführt werden, wobei dann die Anbringungs-Position für die Sonnenblende nicht in dem oberen Rahmenbereich A der Seitentüre des Kraftfahrzeuges erfolgt, sondern weiter vorne im stärker abfallenden Anbringungs-Bereich B. In diesem Falle kommt die Gelenkverbindung nachlaufend zu liegen, wie dies anhand von Figur 5 gezeigt ist.

In diesem Falle wird der untere Haltesteg oder Haltestab 5 von seiner in Figur 5 gezeigter Verschluss- oder Ausgangsposition dann mit entgegengesetzter Verschwenkungsbewegung in Öffnungsrichtung verschwenkt, und liegt dann mit seinem verschwenkbaren Haltesteg oder Haltestab 5 an der Unterseite des oben liegenden Fahrtzeug-Türrahmens 17 an, wobei in dieser Funktionsstellung eine vergleichbare Verschattungsposition erzielt wird, wie dies bei dem Ausführungsbeispiel nach den Figuren 1 bis 3 erläutert wurde.

Abweichend vom gezeigten Faltfächer wäre grundsätzlich auch ein Brisefächer möglich, bei welchem mehrere Stäbe in Form von unterschiedlich langen Keilen aufeinander gelegt und im Bereich der sogenannten Gelenkverbindung über einen dort vorgesehenen Stift gehalten werden, der durch entsprechend fluchtende Bohrungen in den mehreren keilförmigen Stäben hindurch geführt ist. Die oberen Enden der keilförmigen Stäbe werden durch ein Band verbunden und in geöffneter Stellung unter Erzeugung einer fest vorgegebenen maximalen Relativlage zueinander gehalten. In diesem Fall würden die keilförmigen Stäbe aus möglichst dünnen Material bestehen, welches zumindest insoweit eine ausreichende Steifigkeit oder Festigkeit aufweist, um in der Funktionsstellung die keilförmigen Einzelstäbe in der gewünschten Aufspannebene in der Regel parallel zum Seitenfenster zu halten.

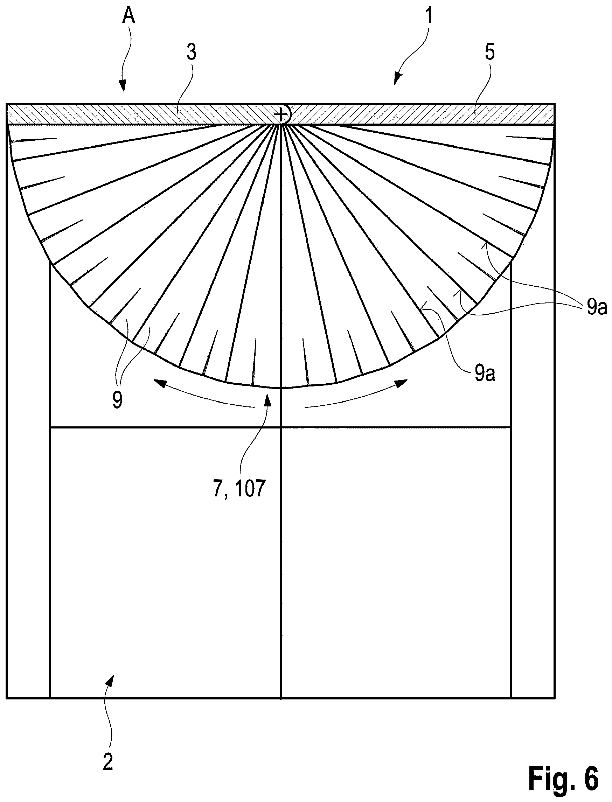

Anhand von Figur 6 ist nur schematisch gezeigt, dass eine entsprechende erfindungsgemäße Sonnenblende beispielsweise auch in einem rechteckförmigen Fenster 2 beliebiger Art beispielsweise in einem Gebäude angebracht werden kann.

Im gezeigten Ausführungsbeispiel ist dabei die Sonnenblende 1 mittels ihres sogenannten oberen Haltestegs oder Haltestabs 3 im Bereich oberhalb eines Fensterdurchbruchs oder Bereichs des oberen Querholms eines Fensterflügels befestigt, und zwar beispielsweise in Figur sechs auf der linken Hälfte A des Fenstersturzes, wobei dann der sogenannte untere Bügel 5 von seiner geschlossenen Position beispielsweise in der linken Hälfte des Fensters gemäß der Darstellung nach Figur 6 in die in Figur 6 gezeigte Öffnungsstellung verschwenkt werden, in der der untere Bügel 5 dann quasi in Verlängerung zum oberen Bügel 3, Seite auf der rechten Seite des Fensters unterhalb des Fenstersturzes zu liegen kommt.

In diesem Fall empfiehlt sich allerdings zur Erziehung einer größeren Verschattungs-Wirkung, dass das fächerförmige Material 7,107 bevorzugt mit gleicher radiale Länge über alle oder zumindest überwiegend über alle Falten neun Kanten 9a hinweg auszugestalten, sodass dann in geöffneter Stellung eine halbkreisförmige Sonnenblende-Wirkung oder Abschattung erzielbar ist.

## Patentansprüche

1. Sonnenblende, für Fenster (2) und insbesondere Kraftfahrzeug-Seitenfenster (2a) mit folgenden Merkmalen:
- die Sonnenblende (1) umfasst einen oberen Bügel (3) und einen unteren Bügel (5),
- der obere Bügel (3) weist zwei gegenüberliegende Enden (4a, 4b) und der untere Bügel (5) weist zwei gegenüberliegende Enden (6a, 6b) auf,
- der obere Bügel (3) und der untere Bügel (5) sind an einen ihrer beiden Enden (4a, 6a) mittels einer Gelenkverbindung (11) gelenkig miteinander verbunden,
- zwischen dem oberen und dem unteren Bügel (3, 5) ist ein flächiges Schirmungsmaterial (7) vorgesehen und darüber gehalten,
- das Schirmungsmaterial (7) ist flexibel,
- der untere Bügel (5) ist zwischen einer Ausgangsposition, in der das flächige Schirmungsmaterial (7) zwischen oberen und unteren Bügel (3, 5) verstaut ist, und einer Sonnenschutzposition, in der der untere Bügel (5) gegenüber dem oberen Bügel (3) um seine Gelenkverbindung (11) verschwenkt oder aufgeklappt ist, verstellbar.

2. Sonnenblende nach Anspruch 1, **dadurch gekennzeichnet, dass** die Gelenkverbindung (11) kniegelenkförmig ausgebildet ist.

3. Sonnenblende nach Anspruch 1 oder 2, **dadurch gekennzeichnet, dass** der obere Bügel (3) als Haltesteg oder Haltestab (3') ausgebildet ist, der vorzugsweise im Querschnitt quer zu dessen Längsrichtung U-förmig unter Ausbildung einer Basis (3a) und zweier seitlich versetzt zueinander liegender Seitenschenkeln (3b) gestaltet ist, wodurch ein Aufnahmeraum (8a) gebildet ist.

4. Sonnenblende nach einem der Ansprüche 1 bis 3, **dadurch gekennzeichnet, dass** der untere Bügel (5) als Haltesteg oder Haltestab (5') ausgebildet ist, der vorzugsweise im Querschnitt quer zu dessen Längsrichtung U-förmig unter Ausbildung einer Basis (5a) und zweier seitlich versetzt zueinander liegender Seitenschenkeln (5b) gestaltet ist, wodurch ein Aufnahmeraum (8b) gebildet ist.

5. Sonnenblende nach Anspruch 3 oder 4, **dadurch gekennzeichnet, dass** im zusammengeklapptem Zustand der Sonnenblende (1) eine der beiden Bügel (5 oder 3) mit seinen Seitenschenkeln (5b oder 3b) zumindest teilweise in den Aufnahmeraum (8a bzw. 8b) des jeweils anderen Bügels (3 oder 5) eintaucht oder eingreift.

6. Sonnenblende nach einem der Ansprüche 1 bis 5, **dadurch gekennzeichnet, dass** eine Klemm-, Rast- oder Schnappverbindung vorgesehen ist, worüber im geschlossenen Zustand der Sonnenblende (1) der untere Bügel (5) am oberen Bügel (3) gehalten ist, der an einem Fenster (2, 2a) verankerbar ist.

7. Sonnenblende nach einem der Ansprüche 1 bis 6, **dadurch gekennzeichnet, dass** das flächige Abschirmungsmaterial (7) flexibel und/oder oder zumindest geringfügig elastisch und vorzugsweise nach Art eines Fächers (107) mit Falten (9) und mehrfach gegensinnig gefalteten Kanten (9a) ausgebildet ist.

8. Sonnenblende nach einem der Ansprüche 1 bis 7, **dadurch gekennzeichnet, dass** eine Federeinrichtung (19) vorgesehen ist, worüber der verschwenkbare untere Bügel (5) in Öffnungsrichtung der Sonnenblende (1) vorgespannt ist und vorzugsweise in seiner maximalen Öffnungslage anschlagsbegrenzt gehalten ist.

9. Sonnenblende nach einem der Ansprüche 1 bis 8, **dadurch gekennzeichnet, dass** der verschwenkbare untere Bügel (5) in seiner maximalen anschlagsbegrenzten Öffnungsstellung mittels einer Befestigungs-Einrichtung gehalten ist, vorzugsweise über Magneten oder einen Klemmverschluss.

10. Sonnenblende nach einem der Ansprüche 1 bis 9, **dadurch gekennzeichnet, dass** an dem oberen Bügel (3) und/oder an dem unteren Bügel (5) jeweils an ihrer zum Schirmmaterial (7) abgewandelt liegenden Seite (3c, 5c) ein Ausgleichs-Element (21,23) vorgesehen ist, welches bevorzugt elastisch ist.

11. Sonnenblende nach einem der Ansprüche 1 bis 10, **dadurch gekennzeichnet, dass** die obere Halteeinrichtung (3) in oder an einem Türrahmen (21) eines Kraftfahrzeugs ein- oder angebaut ist, vorzugsweise mechanisch verankert, eingehängt, verklebt, verschraubt oder mittels Magneten unterstrichen oder einer Klettverbindung befestigt ist.

12. Sonnenblende nach einem der Ansprüche 1 bis 9, **dadurch gekennzeichnet, dass** die obere Befestigungseinrichtung (3) durch einen oberen Türrahmen (21) eines Kraftfahrzeug-Seitenfensters gebildet ist.

13. Sonnenblende nach einem der Ansprüche 1 bis 10, **dadurch gekennzeichnet, dass** die obere Halteeinrichtung (3) parallel zu einem oberen Fenstersturz oder Gewölbebogen eines Fensters (2) verläuft und/oder vorzugsweise daran befestigt ist.
